# EUROPÄISCHE PATENTSCHRIFT

(11) **EP 2 959 192 B1**
(45) Veröffentlichungstag und Bekanntmachung des Hinweises auf die Patenterteilung: **16.10.2019**
(21) Anmeldenummer: 13824304.3
(22) Anmeldetag: 11.12.2013
(51) Int. Cl.: F16H 7/12

(54) **STARTERGENERATOR UND RIEMENSPANNER**
STARTER GENERATOR AND BELT TENSIONER
GÉNÉRATEUR-DÉMARREUR ET TENDEUR DE COURROIE

(30) Priorität: 22.02.2013 DE 102013002993
(43) Veröffentlichungstag der Anmeldung: 30.12.2015
(60) Teilanmeldung: 16182765.4
(73) Patentinhaber: Schaeffler Technologies AG & Co. KG, 91074 Herzogenaurach (DE)
(72) Erfinder: WOLF, Benjamin, 91094 Langensendelbach (DE); LORZ, Wolfgang, 90766 Fürth (DE)
(86) Internationale Anmeldenummer: PCT/DE2013/200359
(87) Internationale Veröffentlichungsnummer: WO 2014/127756

(56) Entgegenhaltungen:
- EP-A2- 2 557 295
- DE-A1-102011 082 764
- DE-B3-102011 084 680
- US-A1- 2003 109 342
- US-A1- 2003 216 203

## Beschreibung

### Startergenerator-Riemenspanner

Die Erfindung betrifft eine Generatoranordnung für einen Nebenaggregate-Riementrieb einer Brennkraftmaschine. Die Generatoranordnung weist einen Startergenerator mit einer Riemenscheibe und einen Riemenspanner auf, der folgendes umfasst:
- einen ersten Spannhebel mit einer ersten Spannrolle,
- einen zweiten Spannhebel mit einer zweiten Spannrolle, wobei die Spannrollen in Umlaufrichtung des Riemens vor und hinter der Riemenscheibe angeordnet sind und den Riemen mit Vorspannkraft beaufschlagen,
- ein zwischen den Spannhebeln eingespanntes Federmittel, das die Spannrollen unter Erzeugung der Vorspannkraft aufeinander zu bewegt,
- und ein Arretiermittel, mittels welchem die Spannhebel relativ zueinander in einer Position arretierbar sind, in der die Spannrollen unter Reduzierung oder Aufhebung der Vorspannkraft voneinander weg bewegt sind,
wobei die Generatoranordnung ein weiteres Arretiermittel umfasst, mittels welchem einer der Spannhebel relativ zum Startergenerator arretierbar ist.

### Hintergrund der Erfindung

Ein Startergenerator, der im Nebenaggregate-Riementrieb einer Brennkraftmaschine angeordnet ist, bewirkt mit seiner wechselweise Drehmoment aufnehmenden und abgebenden Riemenscheibe, d.h. Generatorbetrieb und Startbetrieb der Brennkraftmaschine, einen dementsprechenden Wechsel von Zugtrum und Leertrum des umlaufenden Riemens. Daher erfordert das Spannen des Leertrums einen Riemenspanner mit zwei Spannrollen, die den Riemen vor und hinter der Riemenscheibe vorspannen.

Bekannte Riemenspanner, wie sie beispielsweise in der DE 199 26 615 A1, DE 10 2008 025 552 A1 und DE 10 2006 019 877 A1 vorgeschlagen sind, weisen jeweils ein am Startergenerator befestigtes Spannergehäuse und zwei beweglich darin gelagerte Spannhebel auf, deren Spannrollen durch ein dazwischen angeordnetes Federmittel aufeinander zu kraftbeaufschlagt sind, um den Riemen zu spannen.

Der aus der DE 10 2011 084 680 B3 bekannte Riemenspanner weist einen Spannhebel in Form eines um die Riemenscheibe des Startergenerators verdrehbaren Spannergehäuses mit einer darauf gehäusefest gelagerten Spannrolle auf. In dem Spannergehäuse sind eine Bogenfeder und entgegen deren Federkraft der andere Spannhebel beweglich gelagert. Für eine möglichst einfach durchzuführende Riementriebmontage ist es erforderlich, dass die beiden Spannrollen gegenüber ihrer Betriebsposition voneinander weg bewegt und in dieser beabstandeten Position entgegen der dort stark vorgespannten Feder arretiert sind, um den Riemen bei der Erstmontage ungehindert auflegen oder im Servicefall wechseln zu können. Die gegenseitige Arretierung der beiden Spannhebel erfolgt über einen Sicherungsstift, der dann in miteinander zur Flucht gebrachte Bohrungen im Spannergehäuse und in dem darin gelagerten Spannhebel eingesteckt ist.

Weitere Riemenspanner sind aus der EP 2 557 295 A2, DE 10 2011 082 764 A1 und US 2003/0109342 A1 bekannt.

Ein gattungsgemäßer Riemenspanner mit einem weiteren Arretiermittel geht aus der US 2003/0216203 A1 hervor.

### Aufgabe der Erfindung

Ausgehend hiervon liegt der vorliegenden Erfindung die Aufgabe zugrunde, eine Generatoranordnung der eingangs genannten Art und einen Riemenspanner zur Bildung einer solchen Generatoranordnung hinsichtlich der Riementriebmontage zu verbessern.

### Zusammenfassung der Erfindung

Die Lösung hierfür ergibt sich aus den Merkmalen des unabhängigen Anspruchs 1. Demnach sollen beide Arretiermittel jeweils zwei relativ zueinander in eine Arretierposition bewegbare Ausnehmungen oder Bohrungen umfassen, in die in der Arretierposition ein Arretierstift einsetzbar oder eingesetzt ist. Der generatorseitige Teil des weiteren Arretiermittels kann entweder unmittelbar am Gehäuse des Startergenerators oder an einem dazu separaten Bauteil ausgebildet sein, dass am Generatorgehäuse befestigt wird. Letztere Ausgestaltung ist gemäß dem unabhängigen Anspruch 6 vorgesehen, wonach einer der Spannhebel mittels des weiteren Arretiermittels relativ zu einem Verbindungselement arretierbar ist, das zur Halterung des Riemenspanners am Startergenerator befestigt wird.

Die weitere Arretierung führt zu einer erheblichen Vereinfachung der Riementriebmontage. Dies gilt insbesondere für den Fall, dass der Riemenspanner infolge eines gerissenen Riemens maximal entspannt ist. Dabei ist die Voraussetzung für das ungehinderte Auflegen eines neuen Riemens, dass die Spannhebel gegenseitig in der Position arretiert sind, in der die Spannrollen ausreichend weit voneinander beabstandet sind. Um aber die Spannrollen von der maximal entspannten Position in diese Arretierposition zu bewegen, bedarf es beider Hände des ausführenden Mechanikers, da die beiden Spannrollen nur gleichzeitig voneinander weg in die Arretierposition bewegt werden können - aufgrund der (noch) fehlenden Riemenabstützung würden sonst beide Spannhebel lediglich gemeinsam im Kreis gedreht werden. Und folglich wäre dann ein zweiter Mechaniker erforderlich, der die Arretierung in der beabstandeten Position der beiden Spannrollen setzt.

Die weitere Arretierung hingegen ersetzt die fehlende Riemenabstützung, indem einer der Spannhebel relativ zum Startergenerator drehfixiert wird. Nun kann der Mechaniker mit der ersten Hand den anderen Spannhebel in die Arretierposition drehen und mit der zweiten Hand die Arretierung alleine setzen. Danach kann die weitere Arretierung gelöst werden, um beim Auflegen des neuen Riemens den mit weit beabstandeten Spannrollen blockierten Riemenspanner als Einheit hin und her drehen zu können.

Das oder die Arretiermittel können beispielsweise zu Transportzwecken vollständig an jeder Generatoranordnung oder jedem Riemenspanner ausgebildet sein. Dies muss aber nicht notwendigerweise so sein. Denn das Arretiermittel kann sich auch auf eine geeignete Formgebung an den gegenseitig zu arretierenden Bauteilen beschränken, wobei dann zur Arretierung ein dazu passendes Werkzeug erforderlich ist. Beide Arretiermittel umfassen jeweils zwei in eine Arretierposition bewegbare Ausnehmungen oder Bohrungen, in die in der Arretierposition ein Arretierstift einsetzbar (d.h. noch nicht eingesetztes Werkzeug) oder in jedem Zulieferteil bereits eingesetzt ist.

### Kurze Beschreibung der Zeichnungen

Weitere Merkmale der Erfindung ergeben sich aus der nachfolgenden Beschreibung und aus den Zeichnungen, die eine Prinzipdarstellung und einen ausgeführten Riemenspanner zur Bildung einer erfindungsgemäßen Generatoranordnung zeigen. Sofern nicht anders erwähnt, sind dabei gleiche oder funktionsgleiche Merkmale oder Bauteile mit gleichen Bezugszahlen versehen. Es zeigen:
- Figur 1: die Prinzipdarstellung;
- Figur 2: den Riemenspanner in perspektivischer Vorderansicht;
- Figur 3: den Riemenspanner in perspektivischer Rückansicht;
- Figur 4: den Riemenspanner mit geöffnet dargestelltem Spannergehäuse;
- Figur 5: die Drehlagerung des Riemenspanners am Startergenerator in isolierter Querschnittsdarstellung;
- Figur 6: das Detail A aus Figur 5.

### Ausführliche Beschreibung der Zeichnungen

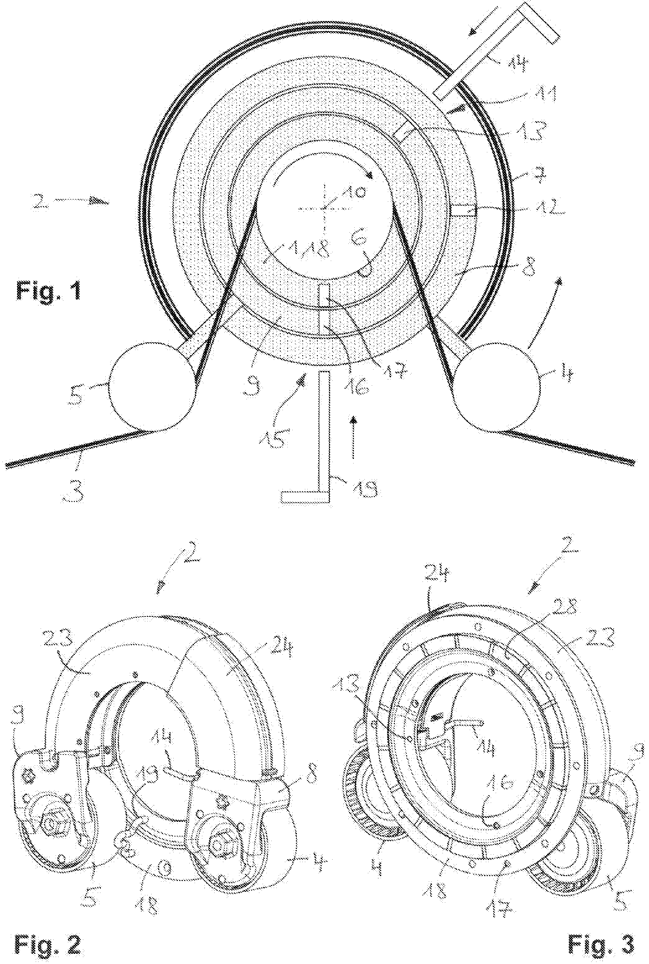

Figur 1 ist eine prinzipielle Darstellung einer erfindungsgemäßen Generatoranordnung für einen Nebenaggregate-Riementrieb einer Brennkraftmaschine. Dabei sind ein Startergenerator 1 und ein frontseitig darauf gelagerter Riemenspanner 2 zu einer Baueinheit zusammengefasst. Da sich bekanntlich die Lage des Zugtrums und des Leertrums im Poly-V-Riemen 3 mit dem Betriebsmodus des Startergenerators 1 ändert, ist der Riemenspanner mit zwei Spannrollen 4 und 5 ausgerüstet, die in Umlaufrichtung des Riemens vor und hinter der Riemenscheibe 6 des Startergenerators angeordnet sind und abwechselnd das momentane Leertrum des Riemens mit Vorspannkraft beaufschlagen. Die Vorspannkraft wird durch ein Federmittel 7 erzeugt, das zwischen zwei Spannhebeln 8 und 9 eingespannt ist, die aufgrund der Federkraft die daran gelagerten Spannrollen aufeinander zu bewegen. Die beiden Spannhebel sind zur Drehachse 10 der Riemenscheibe konzentrisch drehbar gelagert, wobei auch hiervon abweichende Kinematiken ohne Einfluss auf das dargestellte Prinzip existieren.

Der Riemenspanner 2 ist mit einem Arretiermittel 11 ausgestattet, das es ermöglicht, die beiden Spannhebel 8, 9 relativ zueinander in einer Position zu arretieren, in der die Spannrollen 4, 5 unter weitgehender oder vollständiger Entlastung des Riemens 3 voneinander weg bewegt sind. Hierzu wird der erste Spannhebel 8 in der eingezeichneten Relativdrehrichtung im Gegenuhrzeigersinn solange verdreht, bis eine Bohrung 12 im ersten Spannhebel und eine Bohrung 13 im zweiten Spannhebel 9 miteinander fluchten. In dieser Arretierposition wird in die Bohrungen ein Arretierstift 14 eingesetzt, der die beiden Spannhebel mit der Kraft des dort stark vorgespannten Federmittels 7 gegeneinander verspannt.

Beim relativen Verdrehen der beiden Spannhebel 8, 9 in die Arretierposition kann entweder der erste Spannhebel 8 im eingezeichneten Gegenuhrzeigersinn verdreht werden, während sich der zweite Spannhebel 9 mit der zweiten Spannrolle 5 am Riemen 3 abstützt. Umgekehrt kann auch der zweite Spannhebel 9 im Uhrzeigersinn verdreht werden, während sich der erste Spannhebel mit der ersten Spannrolle 4 am Riemen abstützt. Diese Abstützung existiert jedoch bei fehlendem Riemen nicht, der beispielsweise gerissen und abgefallen ist. Für diesen Fall umfasst die Generatoranordnung ein weiteres Arretiermittel 15, das eine Arretierung eines der Spannhebel relativ zum Startergenerator 1 ermöglicht. In dem dargestellten Fall ist der zweite Spannhebel mit einer Bohrung 16 versehen, die in der Arretierposition mit einer Bohrung 17 in einem generatorfesten Bauteil 18 fluchtet. Die weitere Arretierung erfolgt mit einem weiteren Arretierstift 19, der in die Bohrungen 16, 17 eingesteckt wird. In dem so abgesteckten Zustand des zweiten Spannhebels kann ein Mechaniker alleine den ersten Spannhebel mit einer Hand bis zu dessen Arretierposition verdrehen und halten und mit der anderen Hand den Arretierstift 14 einsetzen.

Das generatorfeste Bauteil 18 kann das Gehäuse des Startergenerators 1 sein oder ein am Startergenerator befestigtes Verbindungselement, das den Riemenspanner 2 drehbar am Startergenerator haltert, wie es in dem weiter unten erläuterten Ausführungsbeispiel der Fall ist. Alternativ zu der Darstellung kann das weitere Arretiermittel anstelle der Bohrung 16 im zweiten Spannhebel 9 auch eine Bohrung im ersten Spannhebel 8 umfassen. In diesem Fall wäre dann der erste Spannhebel relativ zum Startergenerator arretiert, so dass zur Arretierung der beiden Spannhebel miteinander der zweite Spannhebel im Uhrzeigersinn in die Arretierposition verdreht werden müsste.

Die das weitere Arretiermittel 15 bildenden Bohrungen 16, 17 sind so zueinander positioniert, dass sie bei stillstehendem Riementrieb und bei dann über seiner gesamten Länge gleichmäßig gespanntem Riemen 3 zumindest in der Nähe ihrer Arretierposition stehen. Das bewirkt, dass sich die Bohrungen 16, 17 beim Abstellen der Brennkraftmaschine und sich vergleichmäßigenden Riementrumkräften selbstständig in Richtung ihrer Arretierposition aufeinander zu bewegen, so dass der zweite Spannhebel 9 ohne großen Verdrehaufwand am Startergenerator 1 bzw. an dem generatorfesten Bauteil 18 abgesteckt werden kann.

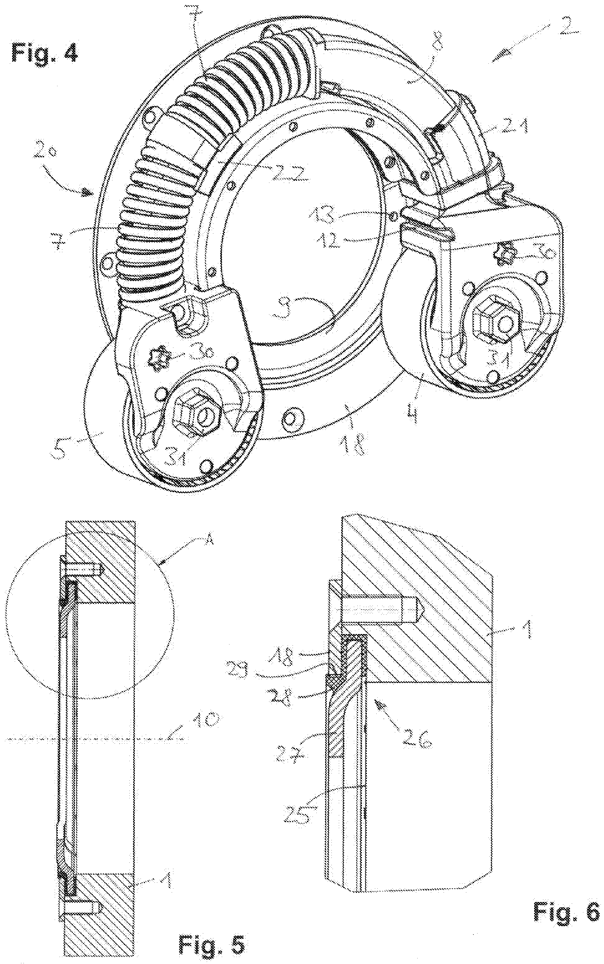

Wie in Figur 1 ist der in den Figuren 2 bis 4 dargestellte Riemenspanner 2 zur frontseitigen Montage auf einen hier nicht dargestellten Startergenerator vorgesehen. Der erste Spannhebel 8 ist als kreisbogenförmiger Spannarm ausgebildet, der an einem Ende von dem Federmittel 7 in Form von zwei in Reihe geschalteten Bogenfedern kraftbeaufschlagt ist und der am anderen Ende die erste Spannrolle 4 lagert. Der zweite Spannhebel 9 bildet ein kreisringförmiges Spannergehäuse mit einer kreisbogenförmigen Kavität 20, in dem die Bogenfedern 7 und das eine Ende des Spannarms 8 in der Ebene des Kreisbogens beweglich gelagert sind. Diese Lagerung erfolgt mittels einer gehäusefesten ersten Lagerschale 21, die den Spannarm umgreift, und einer im Spannergehäuse 9 beweglich gelagerten zweiten Lagerschale 22, die zwischen den beiden Bogenfedern 7 eingespannt ist und (hier nicht erkennbar) einen im Inneren der Bogenfedern verlaufenden Dornfortsatz des Spannarms abstützt. Die zweite Spannrolle 5 ist ortsfest auf dem Spannergehäuse gelagert. Die Kavität ist durch ein in Figur 4 abgenommenes Gehäuseteil 23 verschlossen. Als Spritzschutz der Spannarmlagerung dient eine auf das Gehäuseteil aufgesetzte Kunststoffschale 24.

Wie aus den Figuren 5 und 6 hervorgeht, ist das Spannergehäuse 9 an einer Stirnfläche 25 des Startergenerators 1 konzentrisch zur Generatorachse 10 drehbar gelagert. Dies ermöglicht es, dass bei einem Betriebswechsel des Startergenerators 1 und einem entsprechenden Wechsel von Zugtrum und Leertrum im Riemen 3 das Spannergehäuse 9 mit den Spannrollen 4, 5 um die Generatorachse verschwenkt. Wenn also beispielsweise der Startergenerator 1 vom Starterbetrieb in den Generatorbetrieb wechselt, dann wechselt das Riementrum seitens der ersten Spannrolle 4 von Leertrum auf Zugtrum und seitens der zweiten Spannrolle 5 von Zugtrum auf Leertrum. Folglich führt dieser Betriebswechsel zu einer Verschwenkung des Spannergehäuses aus dem dann aktuellen Zugtrum seitens der ersten Spannrolle heraus in das dann aktuelle Leertrum seitens der zweiten Spannrolle hinein, d.h. bei der in Figur 1 eingezeichneten Umlaufrichtung des Riemens zu einer Verschwenkung im Gegenuhrzeigersinn. Dabei wird die Vorspannkraft im Riemen stets durch die Bogenfedern 7 aufrecht erhalten, die den Spannarm 8 aus dem Spannergehäuse heraus mit Druckkraft beaufschlagen.

Diese Arbeitsweise des Riemenspanners 2, d.h. das spannende Hineinschwenken in das jeweils aktuelle Leertrum bewirkt auch eine sogenannte Entkopplung der rotierenden Startergeneratormasse von der Kurbelwelle der Brennkraftmaschine. Diese Entkopplung übernimmt üblicherweise ein Entkoppler am Generator (z.B. ein Generatorfreilauf) oder an der Kurbelwelle, der bei konventionellen Generatormaschinen ohne Startermodus auf der Generator- bzw. auf der Kurbelwelle angeordnet ist und die vergleichsweise träge rotierende Generatormasse von der Kurbelwelle abkoppelt, wenn deren Drehzahlgradient negativ ist. Das heißt, der erfindungsgemäße Riemenspanner 2 kann auch bei konventionellen Generator-Riementrieben (ohne Startermodus) alternativ oder unterstützend zum Entkoppler verwendet werden.

Die Drehlagerung des Spannergehäuses 9 erfolgt über ein kreisringförmiges Gleitlager 26, das einerseits an der Stirnfläche 25 des Startergenerators 1 und andererseits an dem fest mit dem Startergenerator verbundenen und hier verschraubten Verbindungselement 18 in Form eines Ringflansches anläuft, der das Spannergehäuse am Startergenerator haltert. Das Axial- und Radialkräfte abstützende Gleitlager umfasst einen Teil des Spannergehäuses bildenden Metallring 27, der stirn- und umfangsseitig von einem Lagerring 28 aus Gleitlagerkunststoff ummantelt ist. Die Transportsicherung des Ringflansches 18 bei nicht montiertem Riemenspanner 2 erfolgt über eine Schnappverbindung in Form einer im Lagerring umlaufenden Ringnut 29, in die der Ringflansch mit seinem Innenumfang eingeschnappt ist.

Die Figuren 2 und 3 zeigen den Riemenspanner 2 in vollständig, d.h. doppelt arretiertem Zustand. Der Spannarm 8 ist weitestgehend im Spannergehäuse 9 eingefahren und in dieser Position arretiert. Der gegenseitige Abstand der beiden Spannrollen 4 und 5 ist dabei so groß, dass eine ungehinderte Montage des Riemens 3 in den Riementrieb möglich ist. Das Spannergehäuse ist relativ zum generatorfesten Ringflansch 18 arretiert. Die Arretierung des Spannarms relativ zum Spannergehäuse erfolgt mittels des Arretierstifts 14, der seitens des Spannarms in einer Ausnehmung 12 (siehe Figur 4 ohne Arretierstift) und seitens des Spannergehäuses in der mit der Ausnehmung 12 fluchtenden Bohrung 13 eingesteckt ist. Die weitere Arretierung des Spannergehäuses mit dem Ringflansch umfasst zwei achsversetzte Bohrungen 16 im Spannergehäuse und 17 im Ringflansch und eine darin eingesteckte Sicherungsspange 19.

Das Verdrehen des Spannarms und des Spannergehäuses in die Arretierpositionen kann mittels Standardwerkzeugen bewerkstelligt werden. Hierzu sind die Lagerträger der Spannrollen 4, 5 jeweils mit einem Innentorx 30 und einem Sechskant 31 versehen.

### Liste der Bezugszahlen

- 1: Startergenerator
- 2: Riemenspanner
- 3: Riemen
- 4: erste Spannrolle
- 5: zweite Spannrolle
- 6: Riemenscheibe
- 7: Federmittel / Bogenfeder
- 8: erster Spannhebel / Spannarm
- 9: zweiter Spannhebel / Spannergehäuse
- 10: Drehachse / Generatorachse
- 11: Arretiermittel
- 12: Bohrung / Ausnehmung im ersten Spannhebel
- 13: Bohrung / Ausnehmung im zweiten Spannhebel
- 14: Arretierstift
- 15: weiteres Arretiermittel
- 16: Bohrung / Ausnehmung im zweiten Spannhebel
- 17: Bohrung / Ausnehmung im generatorfesten Bauteil
- 18: generatorfestes Bauteil / Verbindungselement / Ringflansch
- 19: weiterer Arretierstift / Sicherungsspange
- 20: Kavität
- 21: erste Lagerschale
- 22: zweite Lagerschale
- 23: Gehäuseteil
- 24: Kunststoffschale
- 25: Stirnfläche des Startergenerators
- 26: Gleitlager
- 27: Metallring
- 28: Lagerring
- 29: Ringnut
- 30: Innentorx
- 31: Sechskant

## Patentansprüche

1. Generatoranordnung für einen Nebenaggregate-Riementrieb einer Brennkraftmaschine, aufweisend einen Startergenerator (1) mit einer Riemenscheibe (6) und einen Riemenspanner (2), der folgendes umfasst:
- einen ersten Spannhebel (8) mit einer ersten Spannrolle (4),
- einen zweiten Spannhebel (9) mit einer zweiten Spannrolle (5), wobei die Spannrollen (4, 5) in Umlaufrichtung des Riemens (3) vor und hinter der Riemenscheibe (6) angeordnet sind und den Riemen (3) mit Vorspannkraft beaufschlagen,
- ein zwischen den Spannhebeln (8, 9) eingespanntes Federmittel (7), das die Spannrollen (4, 5) unter Erzeugung der Vorspannkraft aufeinander zu bewegt,
- und ein Arretiermittel (11), mittels welchem die Spannhebel (8, 9) relativ zueinander in einer Position arretierbar sind, in der die Spannrollen (4, 5) unter Reduzierung oder Aufhebung der Vorspannkraft voneinander weg bewegt sind,
wobei die Generatoranordnung ein weiteres Arretiermittel (15) umfasst, mittels welchem einer der Spannhebel (8, 9) relativ zum Startergenerator (1) arretierbar ist, **dadurch gekennzeichnet, dass** beide Arretiermittel (11, 15) jeweils zwei relativ zueinander in eine Arretierposition bewegbare Ausnehmungen oder Bohrungen (12, 13, 16, 17) umfassen, in die in der Arretierposition ein Arretierstift (14, 19) einsetzbar oder eingesetzt ist.

2. Generatoranordnung nach Anspruch 1, **dadurch gekennzeichnet, dass** der erste Spannhebel (8) ein kreisbogenförmiger Spannarm ist, der an einem Ende durch die Kraft des Federmittels (7) beaufschlagt ist und der am anderen Ende die erste Spannrolle (4) lagert, und dass der zweite Spannhebel (9) ein Spannergehäuse bildet, auf dem die zweite Spannrolle (5) gehäusefest gelagert ist, wobei das Spannergehäuse (9) an einer Stirnfläche (25) des Startergenerators (1) zur Riemenscheibe (6) konzentrisch drehbar gelagert ist und eine kreisbogenförmige Kavität (20) aufweist, in der das eine oder mehrere Bogenfedern umfassende Federmittel (7) und der Spannarm (8) in der Ebene des Kreisbogens beweglich gelagert sind.

3. Generatoranordnung nach Anspruch 2, **dadurch gekennzeichnet, dass** die Drehlagerung des Spannergehäuses (9) ein kreisringförmiges Gleitlager (26) ist, das einerseits an der Stirnfläche (25) des Startergenerators (1) und andererseits an einem fest mit dem Startergenerator (1) verbundenen Ringflansch (18) anläuft, mittels welchem das Spannergehäuse (9) am Startergenerator (1) gehaltert ist.

4. Generatoranordnung nach Anspruch 3, **dadurch gekennzeichnet, dass** das weitere Arretiermittel (15) durch eine erste Bohrung (16) oder Ausnehmung im Spannergehäuse (9) und durch eine dazu achsversetzte zweite Bohrung (17) oder Ausnehmung im Ringflansch (18) gebildet ist, wobei der zugehörige Arretierstift (19) eine Sicherungsspange ist.

5. Generatoranordnung nach Anspruch 4, **dadurch gekennzeichnet, dass** die das weitere Arretiermittel (15) bildenden Bohrungen oder Ausnehmungen (16, 17) so positioniert sind, dass sich die Bohrungen oder Ausnehmungen (16, 17) beim Abstellen der Brennkraftmaschine selbstständig in Richtung der Arretierposition bewegen.

6. Riemenspanner (2) für einen Nebenaggregate-Riementrieb einer Brennkraftmaschine, der einen Startergenerator (1) mit einer Riemenscheibe (6) aufweist, wobei der Riemenspanner (2) folgendes umfasst:
- einen ersten Spannhebel (8) mit einer ersten Spannrolle (4),
- einen zweiten Spannhebel (9) mit einer zweiten Spannrolle (5), wobei die Spannrollen (4, 5) in Umlaufrichtung des Riemens (3) vor und hinter der Riemenscheibe (6) angeordnet sind und den Riemen (3) mit Vorspannkraft beaufschlagen,
- ein zwischen den Spannhebeln (8, 9) eingespanntes Federmittel (7), das die Spannrollen (4, 5) unter Erzeugung der Vorspannkraft aufeinander zu bewegt,
- ein Arretiermittel (11), mittels welchem die Spannhebel (8, 9) relativ zueinander in einer Position arretierbar sind, in der die Spannrollen (4, 5) unter Reduzierung oder Aufhebung der Vorspannkraft voneinander weg bewegt sind,
- ein am Startergenerator (1) befestigbares Verbindungselement (18) zur Halterung des Riemenspanners (2) am Startergenerator (1),
- und ein weiteres Arretiermittel (15), mittels welchem einer der Spannhebel (8, 9) relativ zum Verbindungselement (18) arretierbar ist,
**dadurch gekennzeichnet, dass** beide Arretiermittel (11, 15) jeweils zwei relativ zueinander in eine Arretierposition bewegbare Ausnehmungen oder Bohrungen (12, 13, 16, 17) umfassen, in die in der Arretierposition ein Arretierstift (14, 19) einsetzbar oder eingesetzt ist.

## Claims

1. A generator arrangement for an accessory belt drive of an internal combustion engine, comprising a starter generator (1) with a pulley (6) and a belt tensioner (2), comprising:
- a first tensioning lever (8) with a first tensioning roller (4),
- a second tensioning lever (9) with a second tensioning roller (5), wherein the tensioning rollers (4, 5) are arranged in the direction of rotation of the belt (3) in front of and behind the belt pulley (6) and act on the belt (3) with biasing force,
- a spring means (7) clamped between the tensioning levers (8, 9), which moves the tensioning rollers (4, 5) towards each other, thereby generating the biasing force,
- and a locking means (11) by means of which the tensioning levers (8, 9) can be locked relative to one another in a position in which the tensioning rollers (4, 5) are moved away from one another by reducing or cancelling the biasing force,
wherein the generator arrangement comprises a further locking means (15) by means of which one of the tensioning levers (8, 9) can be locked relative to the starter generator (1), **characterised in that,** in a locking position, both locking means (11, 15) each have two recesses or bores (12, 13, 16, 17) which are movable relative to each other in the locking position and into which a locking pin (14, 19) is insertable or is inserted.

2. The generator arrangement according to claim 1, **characterised in that** the first tensioning lever (8) is a circular arc-shaped clamping arm which is acted upon at one end by the force of the spring means (7) and on the other end of which is mounted the first tension roller (4), and that second tensioning lever (9) forms a tensioner housing on which the second tensioning roller (5) is mounted securely to the housing, wherein the tensioner housing (9) is concentrically rotatably mounted, with respect to the pulley (6), on an end face (25) of the starter generator (1) and a circular arc cavity (20), in which the clamping arm (8) and the one or more spring means (7) comprising bow springs are movably mounted in the plane of the circular arc.

3. The generator arrangement according to claim 2, **characterised in that** the pivot bearing of the tensioner housing (9) is an annular sliding bearing (26) which starts, on the one hand, on the end face (25) of the starter generator (1) and, on the other hand, at an annular flange (18) securely connected to the starter generator (1), by means of which the tensioner housing (9) is supported on the starter generator (1).

4. The generator arrangement according to claim 3, **characterised in that** the further locking means (15) is formed by a first bore (16) or recess in the tensioner housing (9) and by an off-axis second bore (17) or recess in the annular flange (18), wherein the associated locking pin (19) is a securing clip.

5. The generator arrangement according to claim 4, **characterised in that** bores or recesses (16, 17) forming the further locking means (15) are positioned so that the bores or recesses (16, 17) move automatically in the direction of the locking position when the internal combustion engine is stopped.

6. A belt tensioner (2) for an accessory belt drive of an internal combustion engine, comprising a starter generator (1) with a pulley (6), wherein the belt tensioner (2) comprises the following:
- a first tensioning lever (8) with a first tensioning roller (4),
- a second tensioning lever (9) with a second tensioning roller (5), wherein the tensioning rollers (4, 5) are arranged in the direction of rotation of the belt (3) in front of and behind the belt pulley (6) and act on the belt (3) with biasing force,
- a spring means (7) clamped between the tensioning levers (8, 9), which moves the tensioning rollers (4, 5) towards each other, thereby generating the biasing force,
- a locking means (11) by means of which the tensioning levers (8, 9) can be locked relative to one another in a position in which the tensioning rollers (4, 5) are moved away from one another by reducing or cancelling the biasing force,
- a connection element (18) which can be fastened to the starter generator (1) for holding the belt tensioner (2) on the starter generator (1),
- and a further locking means (15) by means of which one of the tensioning levers (8, 9) can be locked relative to the connecting element (18),
**characterised in that** both locking means (11, 15) each comprise two recesses or bores (12, 13, 16, 17) which are movable relative to each other in the locking position and into which a locking pin (14, 19) is insertable or is inserted.

## Revendications

1. Ensemble générateur pour un entraînement par courroie accessoire d'un moteur à combustion interne, comprenant un générateur-démarreur (1) avec une poulie (6) et un tendeur de courroie (2), comprenant :
- un premier levier de tension (8) avec un premier galet tendeur (4),
- un second levier de tension (9) avec un second galet tendeur (5), les galets tendeurs (4, 5) étant disposés dans le sens périphérique de la courroie (3) devant et derrière la poulie (6) et agissant sur la courroie (3) avec une force de précontrainte,
- un moyen à ressort (7) tendu entre les leviers de tension (8, 9), qui déplace les galets tendeurs (4, 5) l'un vers l'autre, générant ainsi la force de précontrainte,
- et un moyen de blocage (11) au moyen duquel les leviers de tension (8, 9) peuvent être bloqués l'un par rapport à l'autre dans une position dans laquelle les galets tendeurs (4, 5) sont éloignés l'un de l'autre en réduisant ou en annulant la force de précontrainte,
l'agencement de générateur comprenant un autre moyen de blocage (15) au moyen duquel l'un des leviers de tension (8, 9) peut être bloqué par rapport au générateur-démarreur (1), **caractérisé en ce que** les deux moyens de blocage (11, 15) présentent chacun deux évidements ou alésages (12, 13, 16, 17) pouvant se déplacer l'un par rapport à l'autre dans une position de blocage, dans lesquels une broche de blocage (14, 19) peut être insérable ou insérée dans la position de blocage.

2. Agencement de générateur selon la revendication 1, **caractérisé en ce que** le premier levier de tension (8) est un bras de tension en forme d'arc de cercle qui est sollicité à une extrémité par la force du moyen à ressort (7) et à l'autre extrémité qui supporte le premier galet tendeur (4) et **en ce que** le second levier de tension (9) forme un boîtier de tendeur, sur lequel le second galet tendeur (5) est monté fixé au boîtier, le boîtier de tendeur (9) étant monté de manière concentrique en rotation sur une face frontale (25) du générateur-démarreur (1) sur la poulie (6) et présente une cavité en arc de cercle (20) dans laquelle le moyen à ressort (7) comprenant un ou plusieurs ressorts en arc et le bras de tension (8) sont disposés de manière mobile dans le plan de l'arc de cercle.

3. Agencement de générateur selon la revendication 2, **caractérisé en ce que** le positionnement rotatif du boîtier de tendeur (9) est un palier lisse (26) annulaire, qui s'étend d'une part sur la face frontale (25) du générateur-démarreur (1) et, d'autre part, sur un flasque annulaire (18) relié fixement au générateur-démarreur (1) au moyen duquel le boîtier du tendeur (9) est maintenu sur le générateur-démarreur (1).

4. Agencement de générateur selon la revendication 3, **caractérisé en ce que** l'autre moyen de blocage (15) est formé par un premier alésage (16) ou évidement dans le boîtier du tendeur (9) et par un second alésage (17) ou évidement excentré dans le flasque annulaire (18), la broche de blocage associée (19) étant un clip de fixation.

5. Agencement de générateur selon la revendication 4, **caractérisé en ce que** les alésages ou évidements (16, 17) formant l'autre moyen de blocage (15) sont positionnés de telle sorte que les alésages ou évidements (16, 17) se déplacent automatiquement lors de l'arrêt du moteur à combustion interne dans la direction de la position de blocage.

6. Tendeur de courroie (2) pour un entraînement de courroie accessoire d'un moteur à combustion interne, comprenant un générateur-démarreur (1) avec une poulie (6), le tendeur de courroie (2) comprenant :
- un premier levier de tension (8) avec un premier galet tendeur (4),
- un second levier de tension (9) avec un second galet tendeur (5), les galets tendeurs (4, 5) étant disposés dans le sens périphérique de la courroie (3) devant et derrière la poulie (6) et agissant sur la courroie (3) avec une force de précontrainte,
- un moyen à ressort (7) tendu entre les leviers de tension (8, 9), qui déplace les galets tendeurs (4, 5) l'un vers l'autre, générant ainsi la force de précontrainte,
- un moyen de blocage (11) au moyen duquel les leviers de tension (8, 9) peuvent être bloqués l'un par rapport à l'autre dans une position dans laquelle les galets tendeurs (4, 5) sont éloignés l'un de l'autre en réduisant ou en annulant la force de précontrainte,
- un élément de raccordement (18) pouvant être fixé au générateur-démarreur (1) pour maintenir le tendeur de courroie (2) sur le générateur-démarreur (1),
- et un autre moyen de blocage (15) au moyen duquel l'un des leviers de tension (8, 9) peut être bloqué par rapport à l'élément de raccordement (18),
**caractérisé en ce que** les deux moyens de blocage (11, 15) comprennent chacun deux évidements ou alésages (12, 13, 16, 17) mobiles l'un par rapport à l'autre dans une position de blocage, dans lesquels une broche de blocage (14, 19) peut être insérable ou insérée dans la position de blocage.
